Europäisches Patentamt

European Patent Office

Office européen des brevets

(11) Veröffentlichungsnummer: **0 399 166**
**A1**

## (12) EUROPÄISCHE PATENTANMELDUNG

(21) Anmeldenummer: 90105529.3

(22) Anmeldetag: 23.03.90

(51) Int. Cl.⁵: **B60J 7/22**

(30) Priorität: 24.05.89 DE 3916906

(43) Veröffentlichungstag der Anmeldung:
28.11.90 Patentblatt 90/48

(84) Benannte Vertragsstaaten:
**DE ES FR GB IT NL SE**

(71) Anmelder: **Webasto AG Fahrzeugtechnik**
**Kraillingerstrasse 5**
**D-8035 Stockdorf(DE)**

(72) Erfinder: **Reihl, Peter**
**Gerlichstrasse 3**
**D-8000 München 60(DE)**
Erfinder: **Fürst, Arpad**
**Geschwister-Scholl-Ring 35**
**D-8034 Germering(DE)**

(54) **Fahrzeugdach mit Windabweiser.**

(57) Fahrzeugdach mit einem in der festen Dachhaut (18) ausgebildeten Dachausschnitt (17), der mittels einer in Fahrzeuglängsrichtung verstellbaren Abdeckung (12) wahlweise verschlossen oder mindestens teilweise freigelegt werden kann, und mit einem Windabweiser, der ein Windabweiserblatt aufweist, das zwischen einer ausgestellten Lage und einer Außerbetriebsstellung um eine quer zur Fahrzeuglängsrichtung verlaufende Schwenkachse schwenkbar gelagert ist, die ihrerseits entlang einer Führung in Fahrzeuglängsrichtung verstellbar ist. Der in die Außerbetriebsstellung verschwenkte Windabweiser kann in einen unter der festen Dachhaut (18) vor der Vorderkante des Dachausschnittes liegenden Aufnahmeraum geschoben werden. Es ist eine Mitnehmereinrichtung (119, 127) zur selbsttätigen Mitnahme der Schwenkachse des Windabweiserblattes in Fahrzeuglängsrichtung während eines Teils der in Fahrzeuglängsrichtung erfolgenden Verstellbewegung der Abdeckung (12) vorgesehen.

FIG. 8

Die Erfindung bezieht sich auf ein Fahrzeugdach mit einem in der festen Dachhaut ausgebildeten Dachausschnitt, der mittels einer in Fahrzeuglängsrichtung verstellbaren Abdeckung wahlweise verschlossen oder mindestens teilweise freigelegt werden kann, und mit einem Windabweiser, der ein Windabweiserblatt aufweist, das zwischen einer ausgestellten Lage und einer Außerbetriebsstellung um eine quer zur Fahrzeuglängsrichtung verlaufende Schwenkachse schwenkbar gelagert ist, die ihrerseits entlang einer Führung in Fahrzeuglängsrichtung verstellbar ist, wobei der in die Außerbetriebsstellung verschwenkte Windabweiser in einen unter der festen Dachhaut vor der Vorderkante des Dachausschnittes liegenden Aufnahmeraum geschoben werden kann.

Bei einem bekannten, für Aussichtswagen bestimmten Fahrzeugdach dieser Art (DE-PS 578 111) sind mehrere Windabweiserscheiben vorgesehen, die nach Öffnen eines Faltverdecks nicht nur in ihrer Neigung verstellt, sondern auch auf oberen Längsträgern der Seitenwände des Wagenkastens frei längsverschoben und dabei je nach Richtung und Stärke des Windes in beliebigem Abstand voneinander eingestellt werden können. Die Windabweiserscheiben werden dann in der jeweils eingestellten Lage in nicht näher dargestellter Weise festgehalten. Zum Verschließen des Verdecks werden zunächst, offensichtlich von Hand, die Windabweiserscheiben nach vorne verlagert und so weit zurückgedreht, daß sie unter eine feste vordere Dachhaube geschoben werden können. Darauf wird das Verdeck aus seiner zurückgeschobenen Stellung nach vorne gebracht und geschlossen. Die Handhabung des bekannten Fahrzeugdaches ist umständlich.

Es sind ferner Windabweiseranordnungen bekannt, bei denen im Bereich der Vorderkante eines mittels eines Deckels verschließbaren Dachausschnitts ein Windabweiserablatt gelagert ist, das in Abhängigkeit von der Verstellbewegung des Deckels selbsttätig zwischen einer Arbeitsstellung und einer Außerbetriebsstellung verstellt wird. So ist es z.B. bekannt (DE-OS 34 26 998), ein Windabweiserblatt im Bereich seines in der ausgestellten Lage oberen Randes am vorderen Ende zweier Ausstellarme anzulenken, die ihrerseits mit ihrem hinteren Ende an seitlichen Teilen eines Dachrahmens angelenkt sind. Dabei sind das Windabweiserblatt gegenüber den Ausstellarmen und die Ausstellarme gegenüber dem Dachrahmen in Richtung auf die Arbeitsstellung federnd vorgespannt. Das Windabweiserblatt trägt an der von den Ausstellarmen abliegenden, freien Kante einen Nocken, der sich an einer dachfesten Nockenbahn abstützt. Wird der Deckel in die Schließstellung gebracht, verschwenkt er die Ausstellarme so, daß diese das Windabweiserblatt nach hinten kippen und mindestens teilweise nach vorne unter den die Vorderkante der Dachöffnung begrenzenden Teil der festen Dachfläche schieben, wobei der Nocken entlang der Nockenbahn rutscht. Bei einer anderen bekannten Lösung (DE-OS 35 39 987) ist ein im Querschnitt S-förmiges, in eine ausgestellte Lage federnd vorgespanntes Windabweiserblatt um eine dachfeste Achse schwenkbar gelagert, die vor dem Dachausschnitt unterhalb der festen Dachhaut angeordnet ist. An dem Windabweiserblatt ist eine Schubstange angelenkt, die mit einem Mitnehmer an einem vorderen Deckellager zusammenwirkt, um das Windabweiserblatt um seine dachfeste Achse in die Außerbetriebsstellung umzuklappen, wenn sich der Deckel seiner Schließstellung nähert. Es ist bei einem Schiebedach auch bekannt (DE-OS 25 05 736), ein Windabweiserblatt an einer Halterung schwenkbar anzulenken, die um eine vor der Vorderkante des Dachausschnitts liegende, dachfeste Achse schwenkbar und ihrerseits mit Schwenkhebeln gelenkig verbunden ist. Diese Schwenkhebel sind gleichfalls um drehfeste Achsen schwenkbar gelagert, und sie wirken mit Gleitschuhen am Schiebedeckel zusammen, um die das Windabweiserblatt mit der Halterung verbindende, nahe der Dachausschnitt-Vorderkante liegende Schwenkachse abzusenken, wenn der Deckel in seine Schließstellung einfährt. Ein an der Deckelvorderkante sitzender Dichtungswulst trifft dabei auf das Windabweiserblatt und schwenkt dieses entgegen Federkraft mit Bezug auf die abgesenkte Halterung, bis das Windabweiserblatt unter der festen Dachfläche verschwindet. Diesen bekannten Windabweiseranordnungen ist gemeinsam, daß sich ihre Anwendbarkeit auf bestimmte Dachtypen, wie Schiebedächer, Schiebehebedächer und Spoilerdächer, beschränkt. Insbesondere eignen sich die bekannten Windabweiseranordnungen nicht für Lüfterdächer (vergleiche Patentanmeldung P 38 07 961.5), d.h. für Dächer mit einem Deckel, dessen Vorderkante durch Verschwenken des Deckels aus einer Schließstellung in eine Lüfterstellung absenkbar ist, in der ein Lüftungsspalt zwischen der Deckelvorderkante und der Vorderkante des mittels des Deckels verschließbaren Dachausschnittes ausgebildet wird, weil in einem solchen Fall der Windabweiser den Luftdurchtritt durch den Lüftungspalt absperren oder mindestens stark behindern würde.

Der im Anspruch 1 angegebenen Erfindung liegt die Aufgabe zugrunde, ein einfach zu betätigendes Fahrzeugdach mit Windabweiser zu schaffen, das nicht auf spezielle Dachtypen beschränkt, sondern allgemein für beliebige Verdeckarten und insbesondere auch zur Ausbildung als Lüfterdach geeignet ist.

Bei einem Fahrzeugdach mit den Merkmalen des Oberbegriffs des Patentanspruchs 1 wird diese Aufgabe erfindungsgemäß dadurch gelöst, daß eine Mitnehmereinrichtung zur selbsttätigen Mitnahme der Schwenkachse des Windabweiserblattes in Fahrzeuglängsrichtung während eines Teils der in Fahrzeuglängsrichtung erfolgenden Verstellbewegung der Abdeckung vorgesehen ist.

Im Falle des Fahrzeugdachs nach der Erfindung wird die Schwenkachse des Windabweiserblattes in Fahrzeuglängsrichtung in Abhängigkeit von der Verstellbewegung der Abdeckung automatisch verstellt. Dadurch läßt sich der Windabweiser in der Außerbetriebsstellung problemlos in eine Position bringen, in welcher er Dachfunktionen, z.B. ein Lüften durch Absenken der Vorderkante eines schwenkbar gelagerten Deckels, nicht behindert, ohne daß es dazu eines weiteren Zutuns des Fahrers oder eines Beifahrers bedarf.

Ein konstruktiv besonders einfacher Aufbau wird erhalten, wenn die Mitnehmereinrichtung zu beiden Seiten des Dachausschnittes jeweils ein in Fahrzeuglängsrichtung verstellbar geführtes Schubglied aufweist, das mit einem Bewegungen der Abdeckung in Fahrzeuglängsrichtung mitmachenden Stellglied in mindestens einer Bewegungsrichtung der Abdeckung in lösbaren Eingriff gebracht wird.

Dabei kann in weiterer Ausgestaltung der Erfindung das Schubglied in Richtung auf eine Position federnd vorgespannt sein, in welcher es die Schwenkachse des Windabweiserblattes nach hinten in eine nahe der Vorderkante des Dachausschnittes liegende Stellung bringt, wobei sich das Stellglied gegen das Schubglied anlegt und dieses entgegen der Federvorspannkraft nach vorne mitnimmt, wenn sich die Abdeckung im Zuge ihrer Verstellbewegung in Fahrzeuglängsrichtung der vorderen Endstellung nähert. Entsprechend einer abgewandelten Ausführungsform kann aber auch das Schubglied mit dem Stellglied für Längsbewegungen in beiden Richtungen selbsttätig gekuppelt werden, wenn sich die Abdeckung im Zuge ihrer Verstellbewegung in Fahrzeuglängsrichtung der vorderen Endstellung bis auf einen vorbestimmten Abstand genähert hat, wobei diese Kupplung selbsttätig aufgehoben wird, wenn sich die Abdeckung ausgehend von der vorderen Endstellung um einen vorbestimmten Betrag nach hinten bewegt hat.

Vorzugsweise ist eine Schwenkeinrichtung vorgesehen, die dem Windabweiserblatt im Verlauf der Verschiebebewegung der Schwenkachse des Windabweiserblattes eine Schwenkbewegung aufzwingt. Dies erlaubt es, den Aufnahmeraum für den Windabweiser besonders flach zu halten und damit Bauhöhe einzusparen. Die Schwenkeinrichtung kann zweckmäßig zu beiden Seiten des Dachausschnittes dachfest angeordnete Kulissen aufweisen, die im Zusammenwirken mit einem in Abstand von der Schwenkachse des Windabweiserblattes sitzenden Führungsteil des Windabweisers das Windabweiserblatt in Abhängigkeit von einer Verschiebung der Schwenkachse in Fahrzeuglängsrichtung zu einer Schwenkbewegung zwischen der ausgestellten Lage und der Außerbetriebsstellung veranlassen.

Vorteilhaft ist das Windabweiserblatt derart ausgebildet, daß es in der ausgestellten Lage zugleich als Sichtblende dient, welche den unterhalb der Vorderkante des Dachausschnittes liegenden Raum abdeckt.

Entsprechend einer bevorzugten Weiterbildung der Erfindung ist die Abdeckung als Deckel ausgebildet, der in einer vorderen Endstellung um eine an oder nahe seiner Hinterkante liegende Schwenkachse aus einer Schließstellung in eine Lüfterstellung verschwenkbar ist, in welcher die Deckelvorderkante in Abstand unterhalb der Dachebene liegt, während die Deckelhinterkante mindestens näherungsweise in Höhe der festen Dachhaut gehalten wird, wobei der Deckel nach Absenken seiner Hinterkante nach hinten unter die feste Dachhaut in eine Offenstellung verschiebbar ist, in welcher er den Dachausschnitt mindestens teilweise freilegt, und wobei die Schwenkachse des Windabweiserblattes im Verstellbereich des Deckels zwischen der Schließstellung und der Lüfterstellung in einer vorderen Endstellung gehalten ist.

Dabei kann eine Mehrfachnutzung des Windabweisers auch vorteilhaft dadurch erfolgen, daß das Windabweiserblatt derart ausgebildet ist, daß der in den Aufnahmeraum geschobene, in seiner vorderen Endstellung stehende Windabweiser eine Luftleitfläche bildet, die einen Luftstrom aus dem Fahrzeuginnenraum gezielt zu dem Spalt leitet, der zwischen der Vorderkante des Dachausschnittes und der Vorderkante des in die Lüfterstellung abgesenkten Deckels entsteht.

Ausführungsbeispiele der Erfindung sind im folgenden anhand der Zeichnung näher erläutert. Dabei zeigen:

Fig. 1 bis 4 Längsschnitte durch ein Lüfterdach mit Windabweiser bei verschiedenen Stellungen des Deckels,

Fig. 5a und 5b in größerem Maßstab einen Längsschnitt entsprechend Fig. 1, der Einzelheiten der Verstellmechanik des Deckels und des Windabweisers erkennen läßt,

Fig. 6 einen Teillängsschnitt entsprechend Fig. 5b bei in der Lüfterstellung gemäß Fig. 2 stehendem Deckel,

Fig. 7a und 7b einen Längsschnitt entsprechend den Fign. 5a und 5b bei teilweise zurückgeschobenem Deckel,

Fig. 8 eine Teildraufsicht auf das Lüfterdach bei in der Schließstellung entsprechend den Fign. 1, 5a und 5b stehendem Deckel,

Fig. 9 den Schnitt entlang der Linie IX-IX der Fig. 5a,

Fig. 10 den Schnitt entlang der Linie X-X der Fig. 5b,

Fig. 11 den Schnitt entlang der Linie XI-XI der Fig. 7a,

Fig. 12 einen Schnitt entsprechend der Fig. 7a für eine abgewandelte Ausführungsform des Lüfterdaches,

Fig. 13 einen Teillängsschnitt durch das Lüfterdach gemäß Fig. 12 bei in der Lüfterstellung stehendem Deckel,

Fig. 14 eine Teildraufsicht auf das Dach nach den Fign. 12 und 13 bei in Schließstellung stehendem Deckel, wobei das Windabweiserblatt zusätzlich in strichpunktierten Linien auch in seiner ausgestellten Lage angedeutet ist,

Fig. 15 den Schnitt entlang der Linie XV-XV der Fig. 13, und

Fig. 16 den Schnitt entlang der Linie XVI-XVI der Fig. 12.

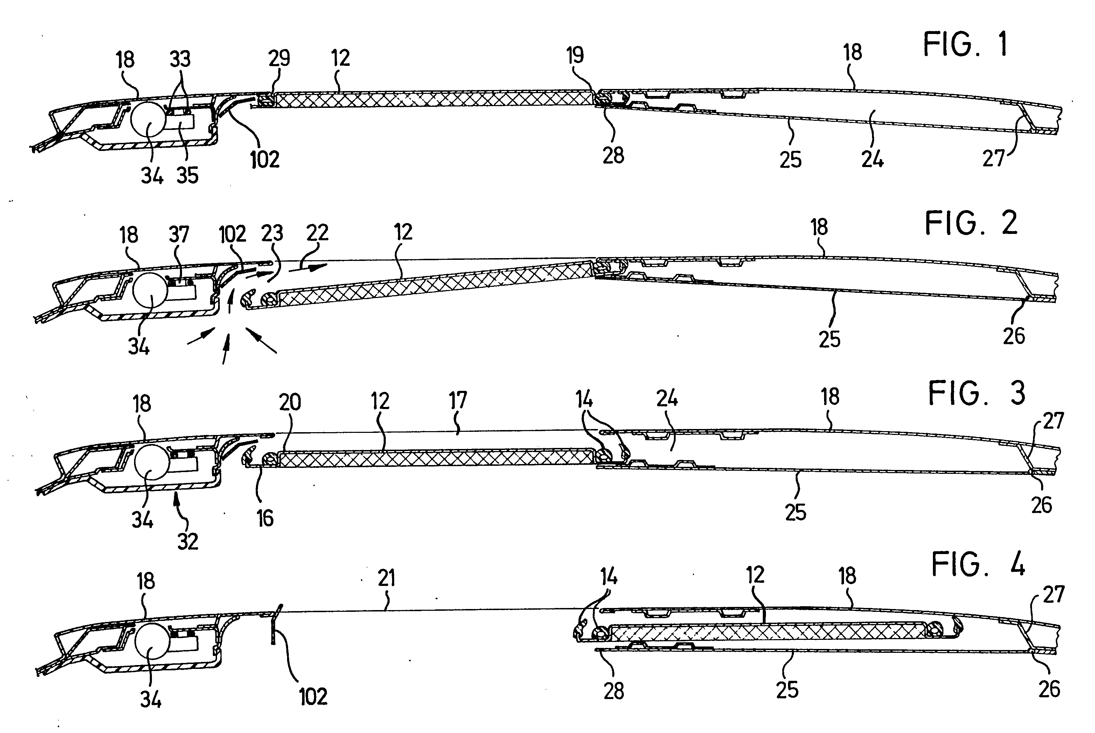

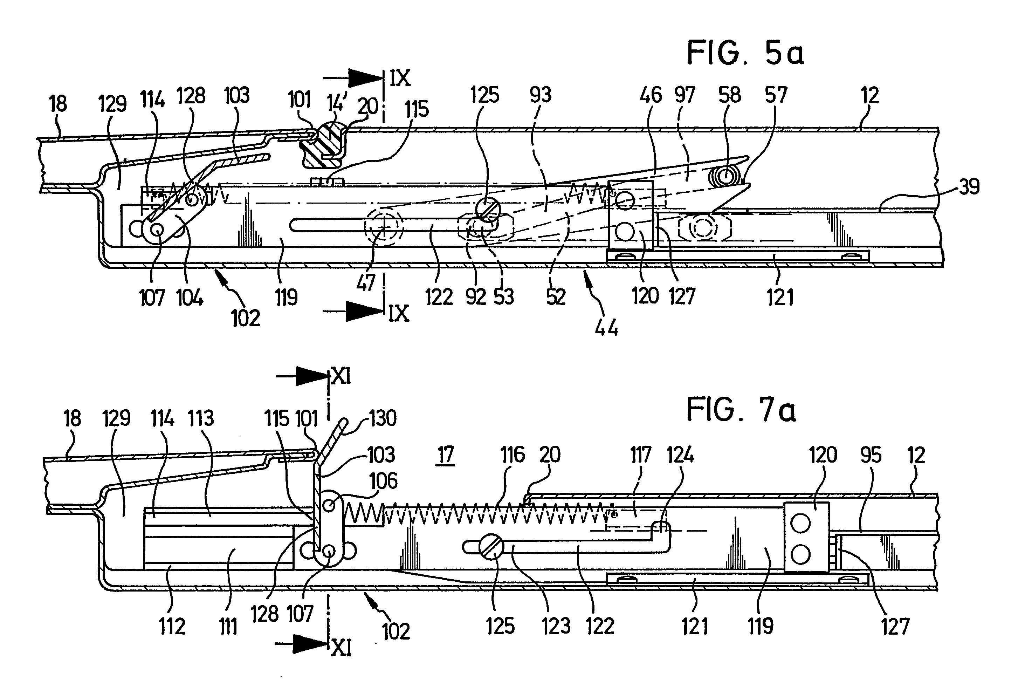

Entsprechend der schematischen Darstellung der Fign. 1 bis 4 weist das veranschaulichte Fahrzeugdach einen Deckel 12 mit einer ringsumlaufenden, zweiteiligen Dichtung 14 auf, die auf einen abgesetzten Randflansch 16 des Deckels aufgesetzt ist. Anstelle einer zweiteiligen Dichtung kann gemäß den Fign. 5a, 5b, 6, 9, 10 und 15 auch eine einteilige Dichtung 14′ vorgesehen sein. Mittels des Deckels 12 kann entsprechend Fig. 1 ein Dachausschnitt 17 in einer festen Dachhaut 18 verschlossen werden. Der Deckel 12 läßt sich mittels einer Verstellmechanik um eine (gedachte) an oder nahe seiner Hinterkante 19 liegende Schwenkachse in eine Lüfterstellung gemäß Fig. 2 schwenken, in welcher die Deckelvorderkante 20 in Abstand unterhalb der bei 21 angedeuteten Dachebene liegt. Dabei wird die Deckelhinterkante 19 mindestens näherungsweise in Höhe der festen Dachhaut 18 gehalten. Wenn während der Fahrt des Fahrzeuges an der Außenseite der Dachhaut 18 ein Unterdruck gegenüber dem im Fahrgastraum herrschenden Druck entsteht, bildet sich ein Luftstrom 22 (Fig. 2) aus, der mittels eines nach vorne unter die Dachhaut 18 geschobenen Windabweisers 102 geführt wird. Das Wageninnere wird durch den Spalt 23 zwischen Deckelvorderkante und fester Dachhaut entlüftet.

Der im vorderen Teil der festen Dachhaut 18 ausgebildete Dachausschnitt 17 läßt sich mindestens teilweise freilegen, indem der Deckel 12 mit seiner Hinterkante 19 unter die Dachhaut abgesenkt und in eine Schiebestellung im wesentlichen parallel zu der Dachebene 21 gebracht (Fig. 3), sowie dann nach hinten unter die Dachhaut 18 geschoben wird (Fig. 4). Der Deckel 12 wird dabei in einem Raum 24 zwischen dem an den Dachausschnitt 17 nach hinten anschließenden Teil der Dachhaut 18 und einem darunter liegenden Festhimmel 25 aufgenommen. Im Zuge des Zurückschiebens des Deckels 12 bewegt sich der Windabweiser 102 so weit nach hinten, daß er ausgestellt werden und den Fahrtwind über den Dachausschnitt 17 ablenken kann. Der Festhimmel 25 kann in nicht näher dargestellter Weise (z.B. entsprechend der Anordnung gemäß der DE-Patentanmeldung P 38 07 961.5) bei 26 an eine dachfeste Querstrebe 27 um eine Querachse verstellbar angelenkt und mit seinem vorderen Ende 28 nach oben federnd vorgespannt sein (Fign. 1 und 2). Beim Absenken der Deckelhinterkante 19 in die Schiebestellung gemäß Fig. 3 wird der Festhimmel 25 von dem Deckel 12 vorne nach unten gedrückt, um den Deckel 12 in den Raum 24 einschieben zu können (Fign. 3 und 4).

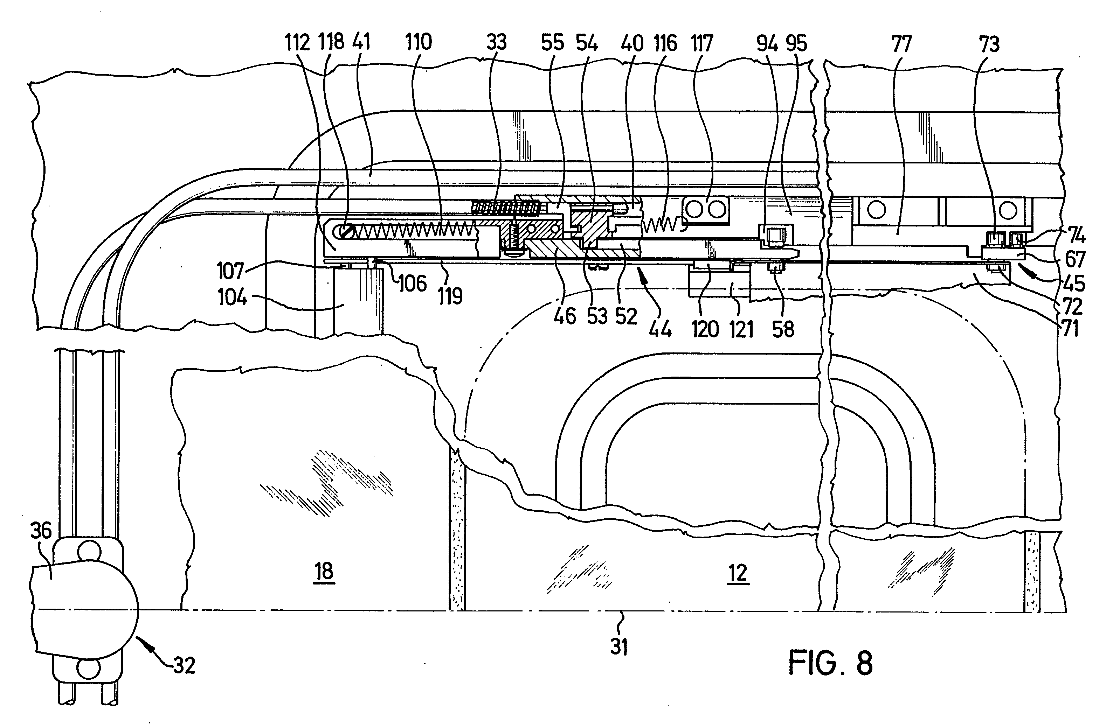

Die Begriffe "vorne" und "hinten" beziehen sich vorliegend auf die Vorwärtsfahrtrichtung des Kraftfahrzeuges, in welches das Dach eingebaut ist. Des weiteren ist das erläuterte Fahrzeugdach einschließlich seiner Stellmechanik im wesentlichen spiegelsymmetrisch mit Bezug auf eine Längsmittelachse 31 (Fig. 8) aufgebaut. Die nachstehende Erläuterung bezieht sich auf die in der Draufsicht rechte Dachseite, gilt jedoch entsprechend auch für die linke Dachseite.

Die Verstellbewegungen werden dem Deckel 12 von einem insgesamt mit 32 bezeichneten Antrieb aufgezwungen, der zwei Antriebskabel 33, beispielsweise in Form von drucksteifen Gewindekabeln, aufweist, die mittels einer gemeinsamen Antriebseinrichtung in Längsrichtung verstellt werden können. In den Fign. 1 bis 4 ist als Antriebseinrichtung ein Antriebsmotor 34 mit nachgeschaltetem Untersetzungsgetriebe 35 angedeutet. Die Fig. 8 zeigt als Alternative dazu eine Antriebseinrichtung in Form einer Handkurbel 36. Die Antriebseinrichtung 34 bzw. 36 treibt ein Ritzel 37 an, das mit beiden Antriebskabeln 33 in Antriebsverbindung steht. Zu beiden Seiten des Dachausschnitts 17 erstreckt sich jeweils eine Längsführung 39, die beispielsweise als dachfest montierte Führungsschiene oder als Teil eines Dachrahmens ausgebildet sein kann. Jede der Längsführungen 39 umfaßt einen Kabelführungskanal 40 für das der jeweiligen Dachseite zugeordnete Antriebskabel 33, einen Kabelführungskanal 41 für das auslaufseitige Ende des der anderen Dachseite zugeordneten Antriebskabels 33 sowie eine Gleitbahn 42. Letztere ist zum Dachausschnitt 17 hin offen.

Die dem Verstellen des Deckels 12 dienende Stellmechanik weist eine vordere Höhenverstelleinrichtung 44 und eine hintere Höhenverstelleinrichtung 45 auf, die unter dem Einfluß der Verstellbewegung der Antriebskabel 33 unabhängig voneinander betätigbar sind.

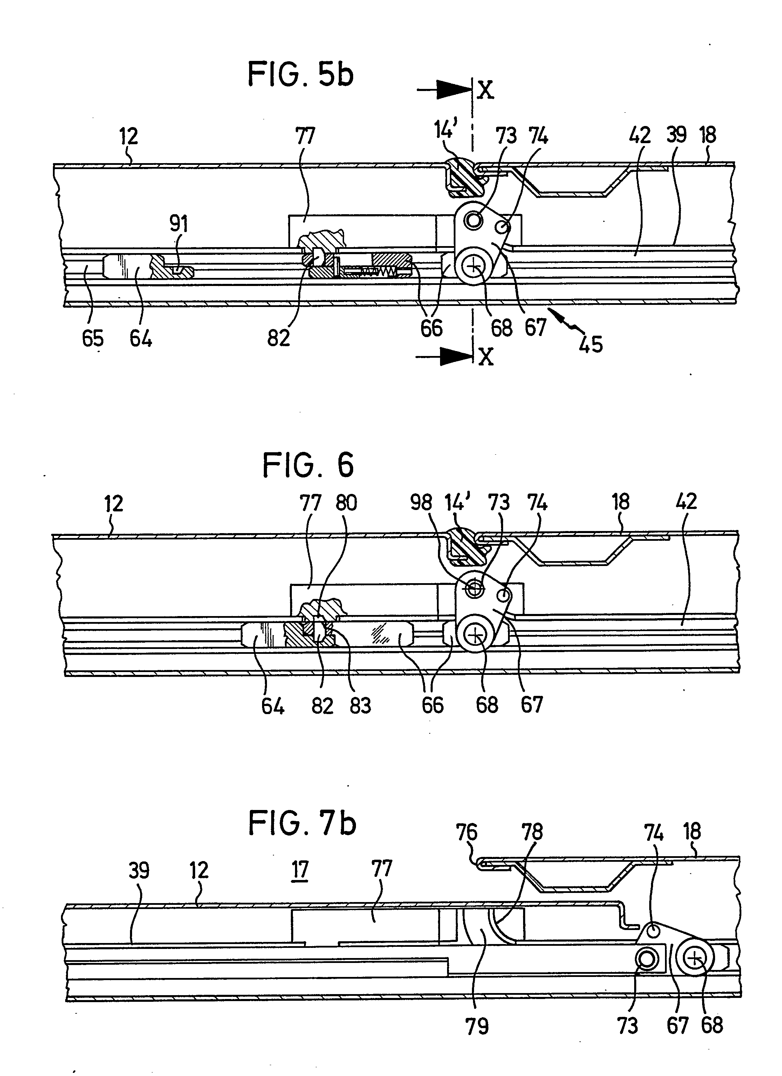

Zu der vorderen Höhenverstelleinrichtung 44 gehört ein zwangsverstellbarer Schwenkhebel 46, der im Bereich seines vorderen Endes für eine Drehbewegung um eine feststehende, quer zur Deckelverschieberichtung verlaufende, mindestens nahezu waagrechte Achse 47 gelagert ist. Für diesen Zweck erstreckt sich ein zylindrischer Vorsprung 48 einer an das vordere Ende der Längsführung 39 anschließenden, dachfesten Kulisse 49 durch eine Öffnung am vorderen Ende des Schwenkhebels 46 hindurch. Der Schwenkhebel 46 und die Kulisse 49 werden über eine in eine Gewindebohrung 50 der Kulisse 49 eingeschraubte Schraube 51 zusammengehalten. In Längsrichtung des Schwenkhebels 46 erstreckt sich eine Kulissenbahn 52, in die ein Kulissenzapfen 53 eingreift. Der Kulissenzapfen 53 ist Teil eines Mitnehmers 54, der über eine Verdrehsicherung 55 mit dem Antriebskabel 33 verbunden ist und dessen Längsbewegungen mitmacht. Die Kulissenbahn 52 geht im Bereich des hinteren Endes des Schwenkhebels 46 in eine nach hinten offene Führungsbahn 57 über. An dem Deckel 12 oder einem deckelfesten Teil 71 ist ein Gleitelement 58 angebracht, das sich entsprechend den Fign. 5 und 8 in die Führungsbahn 57 einlegt, wenn der Deckel 12 seine vordere Endstellung (Fign. 1, 2 und 3) einnimmt.

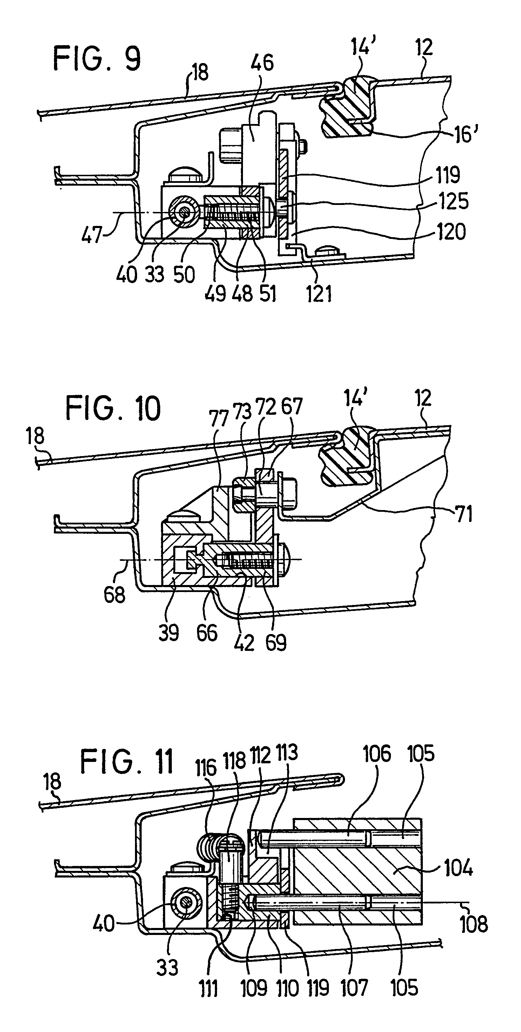

In der Gleitbahn 42 der Längsführung 39 ist ein Riegelstück 64 in Längsrichtung verschiebbar geführt, das über eine Stange 65 mit dem Mitnehmer 54 und damit dem Antreibskabel 33 fest verbunden ist. Hinter dem Riegelstück 64 sitzt ein in der Gleitbahn 42 längsverschiebbares Gleitstück 66, an dem das eine Ende eines Ausstellhebels 67 der hinteren Höhenverstelleinrichtung 45 für eine Schwenkbewegung um eine waagrechte Querachse 68 angelenkt ist. Für diesen Zweck greift ein zylindrischer Ansatz 69 des Gleitstücks 66 in eine komplementäre Bohrung des Ausstellhebels 67 ein (Fig. 10). Das deckelfeste Teil 71 ist mit dem anderen Ende des Ausstellhebels 67 über einen Gelenkbolzen 72 verbunden, auf dem eine Rolle 73 drehbar gelagert ist. Der Ausstellhebel 67 trägt eine weitere Rolle 74.

Im Bereich der Hinterkante 76 des Dachausschnitts 17 ist eine mit der Längsführung 39 zusammenwirkende, dachfeste Kulisse 77 angeordnet. Die Kulisse 77 bildet eine nach unten und hinten weisende Nockenbahn 78 sowie einen vor der Nockenbahn 78 liegenden Kulissenschlitz 79. Im vorderen Teil der Kulisse 77 ist eine sich nach unten in die Gleitbahn 42 öffnende Ausnehmung 80 ausgebildet, die, wenn der Deckel 12 in seiner vorderen Endstellung steht, den oberen Teil eines Riegelsteins 82 aufnimmt (Fig. 5), der in einer Durchgangsöffnung 83 des Gleitstücks 66 senkrecht zur Verschieberichtung dieses Gleitstücks gleitbeweglich geführt ist. In dem Riegelstück 64 ist eine sich nach oben öffnende Ausnehmung 91 ausgebildet, die den unteren Teil des Riegelsteins 82 aufnehmen kann.

Der im Bereich der Vorderkante 101 des Dachausschnitts 17 angeordnete Windabweiser 102 ist mit einem Windabweiserblatt 103 ausgestattet, das bei der Ausführungsform gemäß den Fign. 5 bis 11 als Blechbiegeteil ausgebildet ist, an dem beidseits jeweils ein Seitenteil 104 befestigt ist. In zwei in Abstand voneinan der liegende Querbohrungen 105 des Seitenteils 104 ist jeweils ein Stift 106 bzw. 107 eingesetzt. Die Stifte 106 und 107 stehen über das Seitenteil 104 nach außen seitlich vor. Der Stift 107 bildet zusammen mit einem entsprechenden Stift des Seitenteils auf der anderen Seite des Windabweisers 102 eine quer zur Fahrzeuglängsrichtung verlaufende Schwenkachse 108. Für diesen Zweck ist das freie Ende des Stifts 107 in einer Bohrung 109 eines Lagerbocks 110 drehbar gelagert. Der Lagerbock 110 ist seinerseits in einer Führungsbahn 111 einer an die Längsführung 39 nach vorne anschließenden, dachfesten Kulisse 112 in Fahrzeuglängsrichtung verschiebbar gelagert. Das freie Ende des Stifts 106 ist in einem Kulissenschlitz 113 der Kulisse 112 geführt. Der Kulissenschlitz 113 weist einen zu der Führungsbahn 111 parallelen vorderen Abschnitt 114 und einen daran hinten anschließenden, nach oben abgewinkelten hinteren Abschnitt 115 auf.

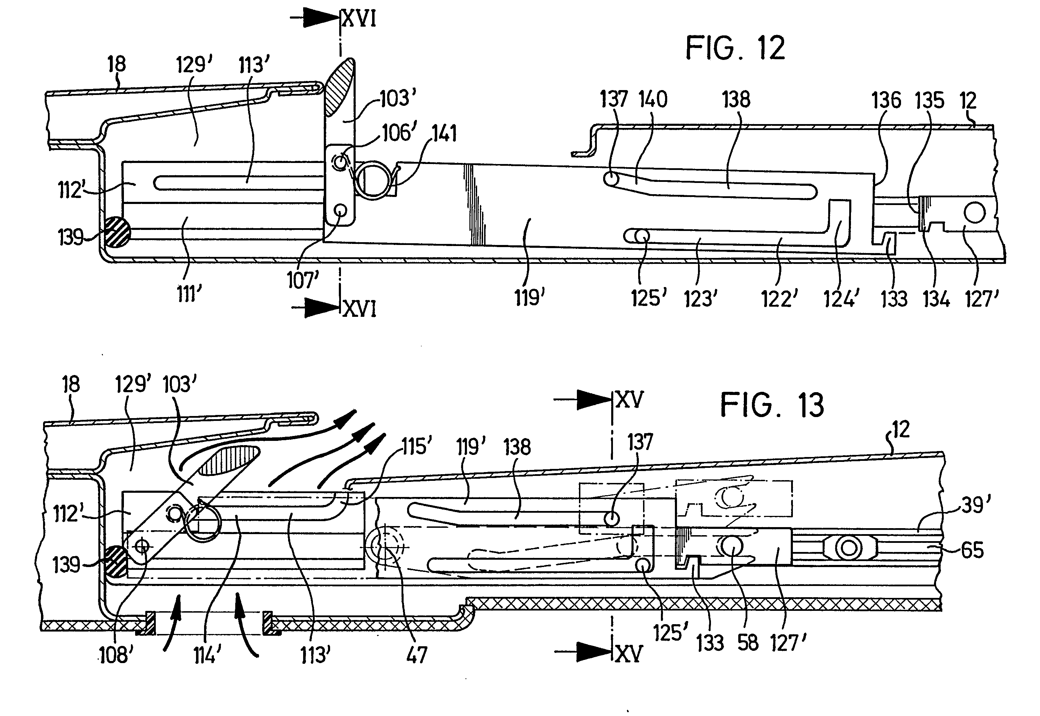

Eine Zugfeder 116 erstreckt sich unter Vorspannung zwischen einem dachfesten Widerlager 117 und einem von dem Lagerbock 110 hochstehenden Widerlager 118. Die Zugfeder 116 sucht den Lagerbock 110 entlang der Führungsbahn 111 nach hinten zu ziehen. Der Stift 107 durchgreift drehbar eine zylindrische Bohrung einer Schubstange 119, deren vorderes Ende zwischen das Seitenteil 104 und den Lagerbock 110 reicht, wie dies aus Fig. 11 zu erkennen ist. Die Schubstange 119 trägt an ihrem hinteren Ende ein Druckstück 120, das mittels eines dachfesten Führungsteils 121 parallel zu der Längsführung 39 verschiebbar geführt ist. In der Schubstange 119 ist ein Kulissenschlitz 122 mit einem zu der Gleitbahn 42 parallelen vorderen Abschnitt 123 und einem nach oben rechtwinklig abgewinkelten hinteren Abschnitt 124 ausgebildet. In dem Kulissenschlitz 122 ist der Kulissenzapfen 53 verschiebbar geführt.

Das veranschaulichte Fahrzeugdach funktioniert wie folgt:

Befindet sich der Deckel 12 in der Schließstellung gemäß den Fign. 1, 5a, 5b und 8, ist der Schwenkhebel 46 um die Achse 47 in die in Fig. 5a dargestellte Lage geschwenkt, in welcher das deckelfeste Gleitelement 58 von der gabelförmigen Führungsbahn 57 des Schwenkhebels 46 gefaßt und nach oben in eine Stellung gebracht ist, in welcher die Deckelvorderkante 20 mit der Vorderkante 101 des Dachausschnitts 17 mindestens nahezu bündig liegt. Der Ausstellhebel 67 nimmt eine im wesentlichen lotrechte Stellung (Fig. 5b) ein, in welcher der Gelenkbolzen 72 das deckelfeste Teil 71 in eine solche Lage bringt, daß die Hinterkante 19 des Deckels 12 mit der Hinterkante 76 des Dachausschnitts 17 mindestens nahezu bündig liegt. Der Riegelstein 82 greift in die Ausnehmung 80 der Kulisse 77 ein. Damit sind das Gleitstück 66 und, über die Stange 65, der Mitnehmer 54 gegen Verschiebebewegungen mit Bezug auf dachfeste Teile gesichert.

Ein deckelfest angebrachtes Stellglied 127 drückt von hinten auf das Druckstück 120, wodurch dieses zusammen mit der daran angebrachten Schubstange 119 entgegen der Kraft der Zugfeder 116 in seiner vorderen Endstellung gehalten wird. Mittels der Schubstange 119 ist auch der Stift 107 und infolgedessen die Schwenkachse 108 des Windabweisers 102 in die in den Fign. 5a und 8 dargestellte vordere Endlage gebracht. Der Stift 106 steht in dem vorderen Abschnitt 114 des Kulissenschlitzes 113. Dadurch wird dem Windabweiserblatt 103 die insbesondere aus der Fig. 5a zu erkennende Schwenklage aufgezwungen, in welcher der der Schwenkachse 108 naheliegende Teil 128 des Windabweiserblattes 103 schräg nach hinten und oben geneigt ist. Der Windabweiser 102 ist als Ganzes in einen Aufnahmeraum 129 vorgeschoben, der vor der Vorderkante 101 des Dachausschnitts 17 liegt. In dieser Außerbetriebsstellung bildet der Windabweiser 102 eine Luftleitfläche, die den in Fig. 2 angedeuteten Luftstrom 22 aus dem Fahrzeuginnenraum gezielt zu dem Spalt 23 leitet, der zwischen der Vorderkante 101 des Dachausschnitts 17 und der Vorderkante 20 des in die Lüfterstellung abgesenkten Deckels 12 entsteht. Bei offenem Dach wird der Schwenkhebel 46 dadurch in der abgesenkten Position gehalten, daß sich ein mit dem Schwenkhebel 46 fest verbundener Kulissenstift 125 in den Abschitt 123 des Kulissenschlitzes 122 einlegt.

Soll der Deckel 12 ausgehend von der Schließstellung in die Lüfterstellung gemäß Fig. 2 gebracht werden, wird über den Antriebsmotor 34 oder die Handkurbel 36 das Antriebskabel 33 mit seinem antriebsseitigen Ende nach hinten verstellt. Dabei wird über den Mitnehmer 54 der Kulissenzapfen 53 entlang einem vorderen Abschnitt 92 der Kulissenbahn 52 nach hinten verstellt. Wandert dann anschließend der Kulissenzapfen 53 entlang dem an den Abschnitt 92 anschließenden, nach hinten ansteigenden Abschnitt 93 der Kulissenbahn 52 entlang, wird der Schwenkhebel 46 von der in Fig. 5a dargestellten Stellung aus im Uhrzeigersinn (in Fig. 5a) um die dachfeste Achse 47 geschwenkt. Der Schwenkhebel 46 nimmt dabei das deckelfeste Gleitelement 58 nach unten mit. Letzteres taucht über eine Ausnehmung 94 der oberen Begrenzungswand 95 der Gleitbahn 42 in die Gleitbahn ein.

Aufgrund der Schwenkbewegung des Schwenkhebels 46 wird der Deckel um eine von den Gelenkbolzen 72 bestimmte Schwenkachse 98 aus der Schließstellung in die Lüfterstellung (Fign. 2 und 6) verschwenkt. Die Deckelvorderkante 20 wird abgesenkt, und das vordere Ende des Stellglieds 127 gleitet entlang dem Druckstück 120 nach unten. Die Schubstange 119 wird durch den Eingriff zwischen dem Kulissenstift 125 und dem Kulissenschlitzabschnitt 124 weiterhin in ihrer vorderen Endstellung gehalten. Über den Spalt 23 (Fig. 2) kann der Wageninnenraum wirkungsvoll entlüftet werden, wobei der Windabweiser 102 den Luftstrom 22 gezielt durch den Spalt 23 leitet.

Beim Übergang des Deckels 12 von der Schließ- in die Lüfterstellung hat sich das Riegelstück 64 in die in Fig. 6 veranschaulichte Stellung bewegt, in welcher das Riegelstück 64 an dem Gleitstück 66 anliegt, um letzteres nach hinten mitzunehmen. Der Riegelstein 82 hat die Ausnehmung 80 verlassen und sich stattdessen mit seinem unteren Ende in die Ausnehmung 91 des Riegelstücks 64 eingelegt. Dadurch wird die Arretierung des Gleitstücks 66 aufgehoben. Das Gleitstück 66 wird über den Riegelstein 82 mit dem Riegelstück 64 sowie über die Stange 65 und den Mitnehmer 54 mit dem Antriebskabel 33 auf Mitnahme gekuppelt.

Bei weiterem Verstellen des Antriebskabels 33 nach hinten kommt das Gleitelement 58 außer Eingrifft mit dem Schwenkhebel 46. Das Gleitelement 58, tritt in die Gleitbahn 42 über. Das Riegelstück 64 und das Gleitstück 66 bewegen sich gemeinsam nach hinten. Durch den Eingriff der Rolle 73 mit dem Kulissenschiltz 79 wird der Ausstellhebel 67 entgegen dem Uhrzeigersinn (in den Fign. 5b, 6 und 7b) in die in Fig. 7b veranschaulichte Stellung geschwenkt. Dadurch wird der Deckel 12 im Bereich seiner Hinterkante 19 abgesenkt (Fign. 3 und 7b), wobei die Rolle 73 von dem Kulissenschiltz 79 in die Gleitbahn 42 übergeht. Der Deckel 12 kann jetzt parallel zur festen Dachhaut 18 nach hinten geschoben werden (Fig. 4). Wenn die Horizontalbewegung des Deckels 12 nach hinten einsetzt, bewegen sich synchron zu dem deckelfesten Stellglied 127 auch das Druckstück 120, die Schubstange 119, der Lagerbock 110 und damit die Schwenkachse 108 und der Windabweiser 102 unter dem Einfluß der Zugfeder 116 geradlinig nach hinten. Diese Bewegung wird dadurch ermöglicht, daß mit dem Absenken der Deckelvorderkante der Kulissenstift 125 des Schwenkhebels 46 in dem Kulissenschlitzabschnitt 124 nach unten gewandert ist und in den Abschnitt 123 des Kulissenschlitzes 122 eintreten kann. In der letzten Phase der Verschiebebewegung des Windabweisers 102 nach hinten wird das Windabweiserblatt 103 dann durch Zusammenwirken zwischen dem Stift 106 und dem gekrümmten hinteren Abschnitt 115 des Kulissenschlitzes 113 aufgerichtet und in seine ausgestellte Betriebslage gebracht, die in Fig. 7a veranschaulicht ist. In dieser Stellung steht der Teil 128 des Windabweiserblattes 103 lotrecht oder nahezu lotrecht, wobei dieses Teil 128 eine Sichtblende bildet, welche den unterhalb der Vorderkante 101 des Dachausschnitts 17 liegenden Spalt gegen Sicht vom Wageninneren her abdeckt. Das an den Teil 128 nach oben anschließende abgewinkelte Ende 130 des Windabweiserblattes 103 ragt über die feste Dachhaut 18 vor, um den Fahrtwind nach oben abzulenken.

Wird die Antriebsrichtung umgekehrt, wird aufgrund der Kupplung zwischen Riegelstück 64 und Gleitstück 66 der Deckel 12 wieder nach vorne geschoben, bis die Rolle 74 auf die Nockenbahn 78 der Kulisse 77 trifft. Bei weiterer Vorbewegung des Gleitstücks 66 wird der Ausstellhebel 67 durch das Zusammenwirken von Rolle 74 und Nockenbahn 78 im Uhrzeigersinn (in Fig. 7b) geschwenkt. Die Rolle 73 tritt aus der Gleitbahn 42 in den Kulissenschlitz 79 über. Der Deckel 12 wird hinten hochgestellt (Fign. 2 und 6). Dabei erreichen das Riegelstück 64 und das Gleitstück 66 wieder die in Fig. 6 veranschaulichte Stellung. Der Riegelstein 82 wird nach oben geschoben und kommt dadurch von dem Riegelstück 64 frei. Er legt sich in die Ausnehmung 80 ein, so daß das Gleitstück 66 wieder mit Bezug auf die Kulisse arretiert ist. Kurz nach Durchlaufen der Stellung gemäß Fig. 7b hat das Stellglied 127 das Druckstück 120 nach vorne entgegen der Kraft der Zugfeder 116 mitgenommen. Die Windabweiser-Schwenkachse 108 wird entsprechend nach vorne verlagert, und durch das gleichzeitige Zusammenwirken von Stift 106 und Kulissenschlitz 113 wird das Windabweiserblatt 103 im Uhrzeigersinn (in den Fign. 5a und 7a) verschwenkt. Der so in die Außerbetriebsstellung geschwenkte Windabweiser 102 wird in den vor der Vorderkante 101 des Dachausschnitts 17 liegenden Aufnahmeraum 129 geschoben.

Beim Vorbewegen des Antriebskabels 33 tritt der Kulissenzapfen 53 in die Kulissenbahn 52 ein und bewegt sich zunächst entlang deren hinterem Abschnitt 97, der bei abgesenkter Deckelvorderkante parallel zu der Gleitbahn 42 verläuft. Wenn der Kulissenzapfen 53 dann den mittleren Kulissenbahnabschnitt 93 erreicht, ist das deckelfeste Gleitelement 58 in die Führungsbahn 57 des Schwenkhebels 46 eingetreten. Durch weiteres Vorbewegen des Mitnehmers 54 wird der Schwenkhebel 46 aufgrund des gegenseitigen Eingriffes von Kulissenzapfen 53 und Abschnitt 93 der Kulissenbahn 52 um die dachfeste Achse 47 entgegen dem Uhrzeigersinn (in Fig. 5a) verschwenkt. Der Deckel 12 wird vorne angehoben. Er hat damit wieder seine Schließstellung (Fign. 5a und 5b) erreicht.

Bei der in den Fign. 12 bis 16 veranschaulichten abgewandelten Ausführungsform ist der Windabweiser 102' als Formteil ausgebildet, bei dem das Windabweiserblatt 103' und die Seitenteile 104' einstückig untereinander verbunden sind. Im übrigen unterscheidet sich diese Ausführungsform von der zuvor erläuterten Ausführungsform im wesentlichen nur dadurch, daß die Schubstange 119' mit dem Stellglied 127' zwecks Betätigung des Windabweisers 102' für Längsbewegungen in beiden Richtungen selbsttätig gekuppelt wird, wenn sich der Deckel 12 im Zuge seine Verstellbewegung in Fahrzeuglängsrichtung der vorderen Endstellung bis auf einen vorbestimmten Abstand genähert hat. Die Schubstange 119' und das Stellglied 127' werden umgekehrt selbsttätig wieder voneinander entkuppelt, wen sich der Deckel 12 ausgehend von der vorderen Endstellung um einen vorbestimmten Betrag nach hinten bewegt hat. Für diesen Zweck sind die Schubstange 119' und das Stellglied 127' mit Klauen 133 bzw. 134 ausgestattet. Nähert sich beim Vorschieben des Deckels 12 das Stellglied 127' der Schubstange 119' (Fig. 12), legt sich die Klaue 134 über die Klaue 133. Sobald dann das Stellglied 127' mit seiner Vorderkante 135 an der Hinterkante 136 Schubstange 119' anstößt. wird die Schubstange 119' von dem Stellglied 127' nach vorne mitgenommen. Dabei wird durch das Zusammenwirken zwischen einem dachfest angebrachten Kulissenstift 137 und einem in der Schubstange 119' ausgebildeten zusätzlichen Kulissenschlitz 138 die Schubstange 119' hinten angehoben. Die Klauen 133 und 134 werden dadurch in formschlüssige gegenseitige Verbindung gebracht. Der in diesem Fall mit der Schubstange 119' einstückig verbundene Lagerbock 110' wird entlang der Führungsbahn 111' der Kulisse 112' nach vorne geschoben. Durch das Zusammenwirken des Stifts 106' mit dem Kulissenschlitz 113' der Kulisse 112' wird das Windabweiserblatt 103' in die in Fig. 13 veranschaulichte Schräglage gebracht und in den Aufnahmeraum 129' unter der festen Dachhaut 18' vorbewegt, bis die Schubstange 119' an einem dachfesten Puffer 139 anliegt.

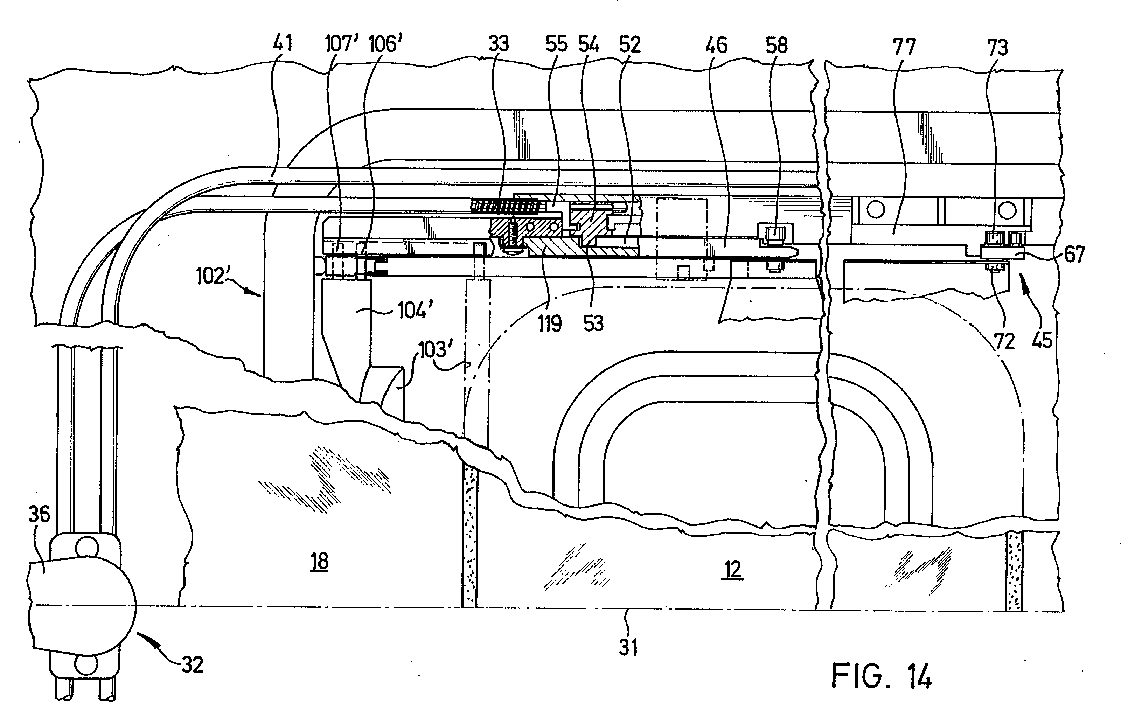

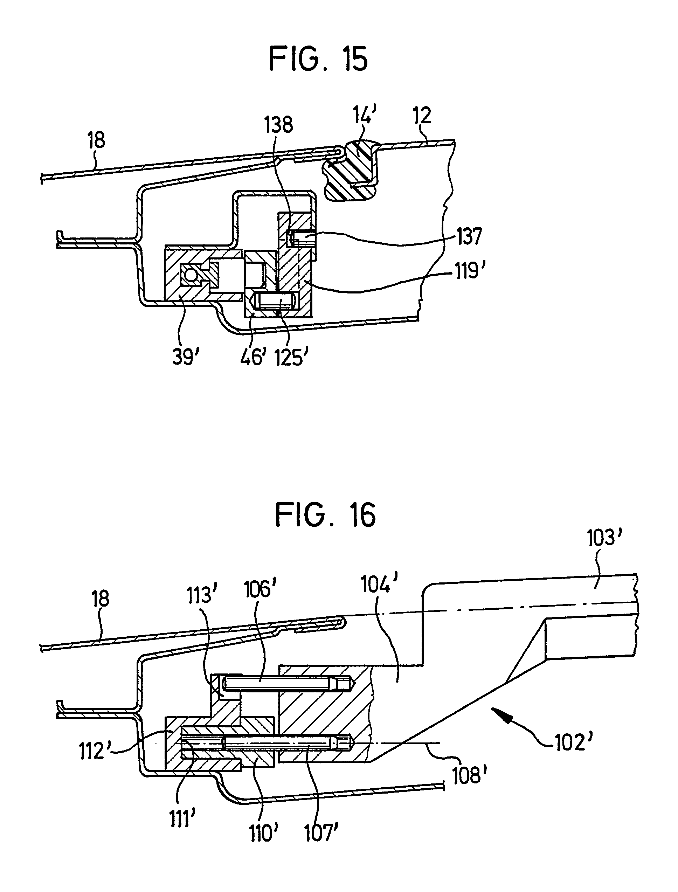

Beim Zurückschieben des Deckels 12' wird die Schubstange 119' von dem Stellglied 127' über die miteinander in Eingriff stehenden Klauen 133 und 134 mitgenommen. Die Schwenkachse 108' des Windabweisers 102' wird wieder nach hinten verlagert. Durch Einlaufen des Stifts 106' in den gekrümmten hinteren Abschnitt 115' des Kulissenschlitzes 113' wird das Windabweiserblatt 103' aufgestellt (Fign. 12 und 16 sowie gestrichelte Darstellung in Fig. 14). Kurz bevor der Windabweiser 102' seine aufgestellte Endlage erreicht, steuert der Kulissenstift 137 die Schubstange 119' über den vorderen abgeknickten Abschnitt 140 des Kulissenschlitzes 138 nach unten. Dadurch wird der Formschluß zwischen den Klauen 133 und 134 gelöst (Fig. 12). Die letzte Phase der Aufstellbewegung des Windabweisers 102' erfolgt unter dem Einfluß einer Schenkelfeder 141, die an dem Stift 106' angreift und die sich vorne gegen die Schubstange 119' abstützt. Die Schenkelfeder 141 drückt dabei die Schubstange 119' gegen einen (nicht dargestellten) Anschlag der Kulisse 112'. Der Schwenkhebel 46' wird über den Kulissenschlitz 122' der Schubstange 119' und den Kulissenstift 125' so fixiert, daß beim Schließen des Deckels 12' das Gleitelement 58' am Stellglied 127' wieder sauber in die gabelförmige Führungsbahn 57' einfädelt.

Die vorstehend in Verbindung mit einem Lüfterdach erläuterte Windabweiseranordnung eignet sich auch für beliebige andere Dachtypen mit mindestens einem mittels einer Abdeckung verschließbaren Dachausschnitt, beispielsweise für Schiebedächer, Schiebehebedächer, Spoilerdächer und Faltdächer.

## Ansprüche

1. Fahrzeugdach mit einem in der festen Dachhaut ausgebildeten Dachausschnitt, der mittels einer in Fahrzeuglängsrichtung verstellbaren Abdeckung wahlweise verschlossen oder mindestens teilweise freigelegt werden kann, und mit einem Windabweiser, der ein Windabweiserblatt aufweist, das zwischen einer ausgestellten Lage und einer Außerbetriebsstellung um eine quer zur Fahrzeuglängsrichtung verlaufende Schwenkachse schwenkbar gelagert ist, die ihrerseits entlang einer Führung in Fahrzeuglängsrichtung verstellbar ist, wobei der in die Außerbetriebsstellung verschwenkte Windabweiser in einen unter der festen Dachhaut vor der Vorderkante des Dachausschnittes liegenden Aufnahmeraum geschoben werden kann, **gekennzeichnet durch** eine Mitnehmereinrichtung (Schubstange 119, 119', Stellglied 127, 127') zur selbsttätigen Mitnahme der Schwenkachse (108, 108') des Windabweiserblattes (103, 103') in Fahrzeuglängsrichtung während eines Teils der in Fahrzeuglängsrichtung erfolgenden Stellbewegung der Abdeckung (Deckel 12).

2. Fahrzeugdach nach Anspruch 1, dadurch gekennzeichnet, daß die Mitnehmereinrichtung zu beiden Seiten des Dachausschnittes (17) jeweils ein in Fahrzeuglängsrichtung verstellbar geführtes Schubglied (Schubstange 119, 119') aufweist, das mit einem Bewegungen der Abdeckung (Deckel 12) in Fahrzeuglängsrichtung mitmachenden Stellglied (127, 127') in mindestens einer Bewegungsrichtung der Abdeckung in lösbaren Eingriff gebracht wird.

3. Fahrzeugdach nach Anspruch 2, dadurch gekennzeichnet, daß das Schubglied (Schubstange 119) in Richtung auf eine Position federnd vorgespannt ist, in welcher es die Schwenkachse (108) des Windabweiserblattes (103) nach hinten in eine nahe der Vorderkante (101) des Dachausschnittes (17) liegende Stellung bringt, und daß sich das Stellglied (127) gegen das Schubglied anlegt und dieses entgegen der Federvorspannkraft nach vorne mitnimmt, wenn sich die Abdeckung (Deckel 12) im Zuge ihrer Verstellbewegung in Fahrzeuglängsrichtung der vorderen Endstellung nähert.

4. Fahrzeugdach nach Anspruch 2, dadurch gekennzeichnet, daß das Schubglied (119') mit dem Stellglied (127') für Längsbewegungen in beiden Richtungen selbsttätig gekuppelt wird, wenn sich die Abdeckung (Deckel 12) im Zuge ihrer Verstellbewegung in Fahrzeuglängsrichtung der vorderen Endstellung bis auf einen vorbestimmten Abstand genähert hat, und daß diese Kupplung selbsttätig aufgehoben wird, wenn sich die Abdeckung ausgehend von der vorderen Endstellung um einen vorbestimmten Betrag nach hinten bewegt hat.

5. Fahrzeugdach nach einem der vorhergehenden Ansprüche, gekennzeichnet durch eine Schwenkeinrichtung (Kulisse 112, 112', Stift 106, 106'), die dem Windabweiserblatt (103, 103') im Verlauf der Verschiebebewegung der Schwenkachse (108, 108') des Windabweiserblattes eine Schwenkbewegung aufzwingt

6. Fahrzeugdach nach Anspruch 5, dadurch gekennzeichnet, daß die Schwenkeinrichtung zu beiden Seiten des Dachausschnittes (17) dachfest angeordnete Kulissen (112, 112') aufweist, die im Zusammenwirken mit einem in Abstand von der Schwenkachse (108, 108') des Windabweiserblattes (103, 103') sitzenden Führungsteil (Stift 106, 106') des Windabweisers (102, 102') das Windabweiserblatt in Abhängigkeit von einer Verschiebung der Schwenkachse in Fahrzeuglängsrichtung zu einer Schwenkbewegung zwischen der ausgestellten Lage und der Außerbetriebsstellung veranlassen.

7. Fahrzeugdach nach einem der vorhergehenden Ansprüche, dadurch gekennzeichnet, daß das Windabweiserblatt (103, 103') derart ausgebildet ist, daß es in der ausgestellten Lage zugleich als Sichtblende dient, welche den unterhalb der Vorderkante (101) des Dachausschnittes (17) liegenden Raum abdeckt.

8. Fahrzeugdach nach einem der vorhergehenden Ansprüche, dadurch gekennzeichnet, daß die Abdeckung als Deckel (12) ausgebildet ist, der in einer vorderen Endstellung um eine an oder nahe seiner Hinterkante liegende Schwenkachse (98) aus einer Schließstellung in eine Lüfterstellung verschwenkbar ist, in welcher die Deckelvorderkante (20) in Abstand unterhalb der Dachebene (21) liegt, während die Deckelhinterkante (19) mindestens näherungsweise in Höhe der festen Dachhaut (18) gehalten wird, daß der Deckel nach Absenken seiner Hinterkante nach hinten unter die feste Dachhaut in eine Offenstellung verschiebbar ist, in welcher er den Dachausschnitt (17) mindestens teilweise freilegt, und daß die Schwenkachse (108, 108') des Windabweiserblattes (103, 103') im Verstellbereich des Deckels zwischen der Schließstellung und der Lüfterstellung in einer vorderen Endstellung gehalten ist.

9. Fahrzeugdach nach Anspruch 8, dadurch gekennzeichnet, daß das Windabweiserblatt (103, 103') derart ausgebildet ist, daß der in den Aufnahmeraum (129, 129') geschobene, in seiner vorderen Endstellung stehende Windabweiser (102, 102') eine Luftleitfläche bildet, die einen Luftstrom (22) aus dem Fahrzeuginnenraum gezielt zu dem Spalt (23) leitet, der zwischen der Vorderkante (101) des Dachausschnittes (17) und der Vorderkante (20) des in die Lüfterstellung abgesenkten Deckels (12) entsteht.

FIG. 1

FIG. 2

FIG. 3

FIG. 4

FIG. 5a

FIG. 7a

EP 0 399 166 A1

# FIG. 5b

# FIG. 6

# FIG. 7b

EP 0 399 166 A1

112 118 41   110   33   55 54   40 116 117   94 95   77   73

107

104

106 119

46 53 52   44   120 121 58

74
67
45
72
71

36

18   12

31

32

FIG. 8

EP 0 399 166 A1

**FIG. 9**

**FIG. 10**

**FIG. 11**

FIG. 12

FIG. 13

EP 0 399 166 A1

FIG. 14

EP 0 399 166 A1

FIG. 15

FIG. 16

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - A1 - 2 607 816 (WEBASTO-WERK W.BAIER GMBH & CO.) * Fig. 3,4 * | 1 | B 60 J 7/22 |
| A | DE - A1 - 3 137 191 (ROCKWELL GOLDE GMBH) * Fig. 2,3 * | 1 | |
| A | DE - A1 - 2 416 173 (WEBASTO-WERK W.BAIER KG) * Fig. 2,6 * | 1 | |

| | | | RECHERCHIERTE SACHGEBIETE (Int Cl⁵) |
|---|---|---|---|
| | | | B 60 J |

Der vorliegende Recherchenbericht wurde für alle Patentansprüche erstellt.

| Recherchenort WIEN | Abschlußdatum der Recherche 20-07-1990 | Prüfer WIDHALM |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82